# EUROPEAN PATENT APPLICATION

(11) **EP 3 699 143 A1**
(43) Date of publication of application: **26.08.2020**
(21) Application number: 19163123.3
(22) Date of filing: 15.03.2019
(51) Int. Cl.: C01B 32/194, C08F 8/12, C08F 18/08, C08L 23/08, C08L 29/04, C09J 129/04, C09J 131/04

(54) **ALKALINE HYDRO BINDING COMPATIBILIZER AGENT ON THE BASIS OF POLY(VINYL ALCOHOL) AND THE METHOD FOR THE PRODUCTION AND ITS USE**

(30) Priority: 25.02.2019 PT 2019115342
(71) Applicant: United Biopolymers, S.A., 3090-451 Lavos (PT)
(72) Inventor: Mendes Ferreira, António Manuel, 3045-096 Coimbra (PT); Antunes Gonçalves Madeira e Góis, Joana Rita, 3030- 491 Coimbra (PT)
(74) Representative: Ferreira Pinto, Francisca

(57) **Abstract**

The invention describes an acetic free alkaline hydro binding compatibilizer agent (HBCA) for polymers, based on a poly(vinyl) alcohol (PVOH)-poly-(vinyl)acetic acid (PVA) copolymer, wherein PVOH and PVA are distributed statistically in the PVOH-PVA copolymer, and method for the production thereof. HBAC is an odorless crosslinked copolymer that acts as binding compatibilizer agent for polar polymers and/or non-polar polymers. The invention also includes the process for producing a phyllosilicate hydro binding compatibilizer agent (*p*-HBCA)) and/or a graphene hydro binding compatibilizer agent (g-HBCA).

A suspension of PVA is hydrolyzed and saponified in the batch process in the presence of hydroxides at high temperatures and the resultant copolymer is partially crosslinked under basic aqueous conditions. HBCA is solid at room temperature, with a residual moisture of 30% to 35% and an acetic content less than 3 ppm. The HBAC acts as a hydro binding agent for polymers. HBAC has a positive effect on the phase compatibility between hydrophilic polymers, such as starch, and hydrophobic polymers in the preparation of blends in the extruder, and consequently enhances substantially the properties of extruded products.

## Description

### FIELD OF THE INVENTION

The present invention relates to an alkaline hydro binding compatibilizer agent (HBCA) comprising a random amphiphilic copolymer, comprising hydrophilic poly(vinyl alcohol) (PVOH) and hydrophobic poly(vinyl acetate) (PVA) and forming a poly(vinyl alcohol-co-vinyl acetate) copolymer, method for the production thereof and the use as binding agent for the preparation of polymer mixtures based on polar polymers and/or non-polar polymers and/or for promoting interfacial adhesion of polymers in a blend comprising polymers. The invention also includes the process for producing a phyllosilicate hydro binding compatibilizer agent (*p*-HBCA)) and/or a graphene hydro binding compatibilizer agent (*g*-HBCA).

### BACKGROUND PRIOR ART

The synthesis of polymer blends or copolymers is carried out to develop polymers with improved properties, e. g. mechanical properties, or properties that are generally not attainable in a single pure component. However, in the preparation of polymer blends, particularly the ones that combine polar and non-polar components, there are often miscibility problems and phase separation occurs.

To increase the miscibility of hardly miscible or immiscible blends, binding agents or compatibilizers, respectively, are used. Compatibilizers are substances which increase the stability and/or morphology of a hardly miscible or an immiscible blend of polymers by creating interactions between the two previously immiscible polymers. Copolymers are formed when the proper functional groups in each component of the immiscible blend interact with the binding agents or compatibilizer. These interactions include hydrogen, ionic or covalent bonds.

Commonly, block or graft copolymers are used as compatibilizers, wherein the copolymer is made of the two components in the immiscible blend. The respective portions of the copolymer are able to interact with the two components of the immiscible blend to make the phase morphology more stable. The increased stability is caused by reducing the size of the phase-separated particles in the blend. The size reduction results from the lower interfacial tension, due to accumulating block copolymers at the interfaces between the two polymers. Thus the immiscible blend breaks up into smaller particles in the melt phase. In turn, these phase separated particles do not consolidate and grow because the interfacial tension is much lower, and the polymer blend is stabilized.

An example of this are ethylene-propylene copolymers (Rudin and Choi 2013) . They are able to act as good compatibilizing agents for blends of polypropylene and low-density polyethylene. In this specific application, longer ethylene sequences are preferred in the copolymer. This is because cocrystallization also factors into this case, and the longer ethylene sequences will retain some residual crystallinity.

Horiuchi *et al.* discloses the modification of SEBS with maleic anhydride to enable adhesion to polar polymers such as polycarbonate (PC) (Horiuchi S, Matchariyakul N, Yase K, Kitano T (1997) "Compatibilizing effect of maleic anhydride functionalized SEBS triblock elastomer through a reaction induced phase formation in the blends of polyamide6 and polycarbonate: 2. Mechanical properties." Polymer 38, 59-78). Disadvantageously, this method is expensive.

Alternatively, poly(vinyl alcohol) (PVOH) is used as compatibilizer. PVOH is a polymer produced by partial or full hydrolysis of poly(vinyl acetate) PVA. PVOH is prepared by first polymerizing vinyl acetate, and the resulting PVA is converted to the PVOH, since the monomer, vinyl alcohol, is unstable with respect to acetaldehyde. Furthermore, PVOH can be prepared from other precursor polymers with formate or chloroacetate groups. The conversion of the polyesters is usually conducted by base-catalyzed transesterification with ethanol. PVOH has excellent film forming, emulsifying and adhesive properties. The properties of PVOH are dependent on humidity, thus with higher humidity more water is absorbed. The water, which acts as a plasticizer, will then reduce its tensile strength, but increase its elongation and tear strength.

DE 199 38 672 C2 discloses a compatibilizer derived from PVA and alkali water glass by hydrolysis for the use in the extrusion of starch with a hydrophobic polymer. EP 1 229 075 B1 describes a compatibilizer derived from PVA by 10 to 70% hydrolysis, preferred 30 to 40% hydrolysis. DE 197 50 846 C1 describes the synthesis of a compatibilizer, wherein PVA is hydrolysed with alkali silicate, bases and catalytic additives, preferred low-molecular hydroxyl compounds, at high temperatures, preferred 140°C, and high pressure.

Furthermore, DE 195 33 800 A1 discloses a compatibilizer comprising water glass, a polymer, e. g. PVOH, and an agent for neutralization selected from organic or inorganic acids, wherein the compatibilizer has a pH value of 5.5 to 7.0. The addition of 2.5 % (w/w) of the compatibilizer to a blend with starch and a polymer is sufficient to achieve a starch content of 75% (w/w) by preservation of the biological degradability.

DE 102 58 227 A1 discloses the use of compatibilizers in the production of a multilayer film comprising starch and polyester, wherein the compatibilizer comprises preferred a block copolymer with hydrophilic and hydrophobic blocks and mostly preferred a partial hydrolysed PVA.

WO 2015/1555198 A1 discloses a silage film obtained by stretching a thermoplastic composition comprising a polyolefin phase containing at least one polyolefin, a starch phase and at least one compatibilizer. The compatibilizer itself is present at the interface between the starch phase and the polyolefin phase or in one of each phases. Examples of this type are block copolymers, having polar and non-polar blocks, maleic anhydride grafted polyolefine, acrylic acid copolymers, ethylene vinyl acetate copolymers, ethylene vinyl alcohol copolymers or partially hydrolyzed and saponified polyvinylacetate.

WO 2013/178746 A1 concerns a biaxially stretched article made from a thermoplastic composition comprising a polyolefin phase, containing at least one polyolefin, a starch phase containing thermoplastic starch and a compatibilizer. Said compatibilizer is basically selected from the group of compatibilizers mentioned for WO 2015/1555198 A1

The PVA or PVOH based compatibilizers of the state of the art mentioned in preceeding paragraphs are linear or branched structures which show several disadvantages, such as those related with the adopted synthesis procedures which leads to a high content of product contaminators such as acetic acid (more than 10 ppm) and aldehydes that negatively affect their organoleptic properties. Moreover, such compatibilizers belonging to the state of the art also demonstrate an insufficient binding or cross-linking capabilities of polar and non-polar polymers, as well as the pejorative acetic acid odor of the final polymer blend.

### SUMARY OF THE INVENTION

The present invention is faced with the problem of providing a compatibilizer agent useful as a binding agent for the preparation of polymer mixtures based on polar polymers and/or non-polar polymers which solves the technical disadvantages known from prior art compatibilizers as discussed in the preceding paragraph. The compatibilizer agent according to the present invention presents improved capabilities for binding or cross-linking of polar and non-polar polymers, high oxygen/nitrogen barrier and solves the problem related to the acetic acid odor of compatibilizers and final copolymers comprising PVA.

For solving the above related technical problem, the present invention provides the alkaline hydro binding compatibilizer agent (HBCA) comprising a random amphiphilic copolymer, comprising hydrophilic poly(vinyl alcohol) (PVOH) and hydrophobic poly(vinyl acetate) (PVA), forming a three-dimensional polymer network based on the copolymer poly(vinyl alcohol-co-vinyl acetate) copolymer, method for the production thereof and the use as binding agent for the preparation of polymer mixtures based on polar polymers and/or non-polar polymers. The present invention also includes the process for producing a phyllosilicate hydro binding compatibilizer agent (p-HBAC)) and/or a graphene hydro binding compatibilizer agent (g-HBAC).

It is therefore an object of the present invention a method for production of an acetic-free alkaline hydro binding compatibilizer agent (HBCA) for polymers, comprising the following steps:
**a)** Providing a poly(vinyl acetate) (PVA) aqueous dispersion in a reactor;
**b)** Addition of a protective colloid in liquid to the reactor to form a suspension or solution from the poly(vinyl acetate) (PVA) aqueous dispersion of a);
**c)** Adjustment of pH value of the suspension or solution to at least pH 7;
**d)** Hydrolysis of poly(vinyl acetate) (PVA) to obtain a PVA copolymer;
**e)** Cross-linking of the PVA copolymer from step d) by addition of at least one cross-linker;
**f)** Extraction of reaction side products;
**g)** Final adjustment of the reaction mixture to a pH of 7.5 to 8.5.

A further object of the present invention comprises a method as previously referred which further comprises after step g) a step h) where the acetic-free alkaline hydro binding compatibilizer agent (HBCA) for polymers is physically blended with organo silicates and/or graphene.

A further object of the present invention is a previously defined method wherein the Mw of PVA is between 200 KDa and 1000 kDa..

A still further object is a method as previously defined wherein the dilution of the poly(vinyl acetate) (PVA) aqueous dispersion of a) is above 50% (w/w).

An additional object is a method as previously defined wherein the ratio of protective colloid is between 1:10 (w/w).

An additional object is a method as previously defined, wherein in step c) the pH of the aqueous suspension is adjusted up to 8.5 by the addition of at least one base.

An additional object is a method as previously defined wherein a reducing agent is added before step d).

An additional object is a method as previously defined wherein in steps c) and d) the base is continuously added to obtain a degree of hydrolysis of 10 - 50%.

An additional object is a method as previously defined wherein the step d) is carried out at a temperature of 80 °C to 160 °C.

An additional object is a method as previously defined wherein in step e) the PVA copolymer is crosslinked by the addition of at least one crosslinker.

An additional object is a method as previously defined wherein in the step e) the crosslinker is added in an amount of 0,002% to 2 % by weight of the weight of PVA.

An additional object is a method as previously defined wherein step e) is followed by crystallization.

An additional object is a method as previously defined wherein in the step f) the side products in the mixture are extracted by chemical and/or physical methods.

A further object of the present invention is an alkaline hydro binding compatibilizer agent (HBCA) for polymers characterized in that it comprises:
a poly(vinyl) alcohol (PVOH)-poly-(vinyl acetate) (PVA) copolymer, ,
   wherein PVOH and PVA are distributed statistically in the PVOH-PVA copolymer,
wherein the HBCA has an acetic acid content < 5 ppm (w/w),
wherein the HBCA is able to retain water up to 40%, more preferably has residual moisture of 10% to 40%,
and wherein the HBCA has a pH value of 7.5 to 8.5.

An additional object of the present invention is an alkaline hydro binding compatibilizer agent (HBCA) as described previously, forming a three-dimensional polymer network structure based on the copolymer poly(vinyl alcohol-co-vinyl acetate) copolymer.

A further object of the present invention is an alkaline hydro binding compatibilizer agent (HBCA) for polymers as previously defined wherein the acetic acid content is < 3 ppm (w/w).

A further object of the present invention is an alkaline hydro binding compatibilizer agent (HBCA) for polymers as previously defined comprising at least one further component, wherein the further component is selected from at least one silicate, such as, nesosilicate or phyllosilicate; a polycyclic aromatic hydrocarbon such as, graphene; and/or at least one polymer, such as, starch.

A further object of the present invention is the use of an alkaline hydro binding compatibilizer agent (HBCA) for polymers as previously defined for promoting interfacial adhesion of polymers in a blend comprising at least one polymer.

A further object of the present invention is the use of an alkaline hydro binding compatibilizer agent (HBCA) for polymers as previously defined in a blend of polymers comprising at least one polar polymer and at least one non-polar polymer or at least one hydrophilic polymer and at least one hydrophobic polymer.

A further object of the present invention is the use of an alkaline hydro binding compatibilizer agent (HBCA) for polymers as previously defined, in a polymer blend comprising starch, at least one non-polar polymer and/or at least one polyolefin.

Finally it is a further object of the present invention a method for the production of a polymer blend comprising at least one polar polymer and at least one non-polar polymer comprising the steps:
a) Providing a composition comprising at least one polar polymer, at least one non-polar polymer and the alkaline hydro binding compatibilizer agent (HBCA) for polymers according to claims 14 to 16, and
b) Co-extruding the composition of a) until obtaining the polymer blend.

### FIGURES

Figure 1 shows the thermogravimetric analysis (TGA) of HBCA.
Figure 2: ¹H NMR spectrum of the PVA-co-PVOH in DMSO-d₆.
Figure 3: FTIR spectra of PVA and PVA-co-PVOH after freeze drying.
Figure 4: Images obtained by scanning electron microscopy (SEM) from a cross section of a polymer blend comprising the HBCA as hydro binding compatibilizer agent between two immiscible polymers.

### DETAILED DESCRIPTION OF THE INVENTION

The present invention is faced with the problem of providing a compatibilizer agent useful as a binding agent for the preparation of polymer mixtures based on polar polymers and/or non-polar polymers which solves the technical disadvantages of binding or cross-linking capabilities of polar and non-polar polymers, its high oxygen/nitrogen barrier as well as the acetic acid odor of compatibilizers and final copolymers comprising PVA.

The problem of the present invention has been solved by the method for production of an alkaline hydro binding compatibilizer agent (HBCA) for polymers, optionally, a phyllosilicate hydro binding compatibilizer agent (HBCA-p) and/or optionally, a graphene hydro binding compatibilizer agent (HBCA-g) comprising the following steps:
**a)** Providing a poly(vinyl acetate) (PVA) aqueous dispersion in a reactor;
**b)** Addition of a protective colloid in liquid to the reactor to form a suspension or solution from the poly(vinyl acetate) (PVA) aqueous dispersion of a);
**c)** Adjustment of pH value of the suspension or solution to at least pH 7;
**d)** Hydrolysis of poly(vinyl acetate) (PVA) to obtain a PVA copolymer;
**e)** Cross-linking of the PVA copolymer from step d) by addition of at least one cross-linker;
**f)** Extraction of reaction side products;
**g)** Final adjustment of the reaction mixture to a pH of 7.5 to 8.5.

According to the invention, a dispersion of the poly(vinyl acetate) (PVA) with variable molecular weight (Mw) distribution may be used. The Mw of PVA can be between 200 KDa and 1000 kDa; preferably from 500 KDa to 1000 kDa..

The suspension of PVA can be in an aqueous solution, mostly preferred in deionized water with a solid content of at least 50% (w/w), preferably 55% (w/w).

In order to form a suspension or a solution, step b) requires adding a protective colloid in liquid into the reactor.

The provision of a protective colloid according to step b) can be carried out by suspension of a protective colloid in a solvent or by synthesis of a protective colloid.

A protective colloid according to the invention is a polymeric compound which is used as additive in methods for the production of solid substances from liquid phases to allow for the formation of stable suspensions, to prevent agglomeration of single molecules and to allow for the formation of a uniform particle size distribution. Advantageously, the protective colloid attaches with its hydrophobic part to the single molecule and with its hydrophilic part to the solvent.

The protective colloid can be an additive, preferably a surfactant or polymer.

The provision of a protective colloid according to step b) can be carried out by suspension in an aqueous solution, mostly preferred in deionized water.

The concentration of the protective colloid suspension may be from 5% to 15% (w/w), preferably 10% (w/w). As used herein, "% (w/w)" refers to the mass of the protective colloid relating to the mass of the protective colloid suspension. Optionally, the ratio of protective colloid is between 1:10 (w/w). Preferably, an aqueous solution of sodium bisulfite is used as a protective colloid and is added to the reactor for the mentioned purpose. Most preferably an aqueous solution of sodium bisulfite (35% (w/w)) is added for the mentioned purpose.

The suspension of a protective colloid in a solvent can be added to the mixture under constant agitation.

In step c). the pH value of the PVA dispersion is adjusted to at least pH 7, preferably to pH 7.5 to 8.5.

The adjustment of the pH value to at least pH 7 according to step c) is carried out by addition of at least one base. The base can be added continuously to the mixture for about 60 minutes. The at least one base can be selected from the group consisting of sodium hydroxide, sodium methoxide, potassium hydroxide, guanidine carbonate, sodium methyl carbonate and sodium ethoxide. Preferred base is sodium hydroxide.

In addition, optionally the adjustment of the pH value to at least pH 7 according to step c) can be carried out at a temperature above 50 °C, preferably above 80°C, most preferably from 80 to 82°C.

Optionally, the method for production of a HBCA according to the invention comprises the addition of a reducing agent before step c). In a preferred embodiment the reducing agent is an inorganic sulphite, preferably selected from sodium dithionite (Na₂S₂O₄), sodium metabisulfite (Na₂S₂O₅) and sodium bisulfite (NaHSO₃).

The addition of a reducing agent can be carried out with a constant agitation.

The hydrolysis of poly (vinyl acetate) (PVA) in step d) can be carried out by the adjustment of a pH value between pH 7.0 and 7.3.

The hydrolysis of PVA is carried out continuously and/or stepwise.

For the purpose of hydrolysis of PVA, at least one base, such as NaOH solution may be added to the mixture continuously by spray dosing.

In an embodiment the hydrolysis of PVA is carried out at a temperature of 80°C to 160°C. In a preferred embodiment the hydrolysis of PVA is carried out by heating to a temperature of from 85°C to 128°C. The temperature of the reaction mixture can reach from 132 to 145°C. In addition, the hydrolysis of PVA at a temperature of 85°C prevents local overheating.

When a temperature of approximately 135°C is reached, the external heating is stopped. The reaction mixture is heated up due to the addition of the base and due to the exothermic heat resulting in this process. The reaction mixture reaches from 132°C to 145°C because of the exothermic heat. Advantageously, the continuous hydrolysis of PVA prevents local overheating.

The hydrolysis of PVA in a pilot reactor of 1T is carried out with a mass flow rate of 3.00 Kg/h to 12 Kg/h, preferred 9 Kg/h. In the case of the scale-up to a reactor with gross volume of 20 T, the flow rate is adjusted to 1200 Kg/h.

The hydrolysis of PVA can be a partial hydrolysis, thereby reaching a degree of hydrolysis of from 10% to 50%. Advantageously, the hydrolysis of PVA does not disrupt the long-chain structure of PVA.

In a preferred embodiment the majority of acetic acid resultant from PVA hydrolysis is converted to sodium acetate.

According to the invention, the steps a) to d), are followed by step e), consisting of crosslinking of the PVA copolymer obtained in the previous step by addition of at least one cross-linker. As used herein, the term "cross-linker" refers to a substance with at least two functional groups, which reacts with polymers and thus forms covalent bonds between two polymers or in between one polymer. Crosslinking agents according to the present invention can be selected from silicon dioxide, phosphoric acid, sodium tetraborate decahydrate and/or ionic cross-linkers, preferably graphene or silicates, especially preferred nesosilicates or phyllosilicates.

The addition of the cross-linking agent in step e) can be carried out either stepwise or continuously, for example, by spray dosing, where a diluted solution of crosslinking agent is added to the mixture.

Alternatively the cross-linking according to step e) is carried out continuously or stepwise by the addition of phosphoric acid or sodium tetraborate decahydrate.

The cross-linking according to step e) may be carried out by addition of 0.002% to 2% phosphoric acid related to the mass of the copolymer (w/w). In a preferred embodiment 0.002% to 0.005% phosphoric acid dissolved in deionized water is spray dosed into the mixture under slow stirring.

Alternatively, the cross-linking according to step e) can be carried out by addition of 0.01% to 0.5% sodium tetraborate decahydrate in relation to the mass of the copolymer (w/w), preferred by addition of 0.05% to 0.2% sodium tetraborate decahydrate in relation to the mass of the copolymer (w/w).

In addition, the cross-linking according to step e) can be carried out at a constant pH value between pH 6.5 and 10, preferred pH 8.0 and 9.0.

The cross-linking according to step e) can be carried out at higher temperatures and with a constant agitation, preferably between 75 and 150 rpm.

The method for production of HBCA according to the steps a) to e) is optionally followed by a crystallization step.

The crystallization of HBCA can be carried out by cooling progressively the reaction mixture to 100 and 40°C, preferably at a temperature between 45°C and 60°C.

Where a crystallization takes place after hydrolysis of PVA, the cross-linking according to step e) is carried out by the addition of a solution of sodium tetraborate decahydrate, sodium carbonate, lithium hydroxide or polycyclic aromatic hydrocarbon, preferably of graphene before or during the crystallization step.

In addition, the cross-linking according to step e) may proceed by the addition of at least one silicate, preferably at least one nesosilicate or phyllosilicate; and/or addition of a polycyclic aromatic hydrocarbon, preferably of graphene.

The cross-linking according to step e) may be carried out either in the reactor or in the crystallization unit.

In a further embodiment, the extraction of reaction side product according to step f) and the final adjustment of pH according to step g) to pH 7.5 to 8, may occur simultaneously with step d) by the addition of sodium carbonate, lithium hydroxide or magnesium oxide.

The hydrolysis of PVA (step d)) can be carried out by the further addition of at least one base to increase the pH of the medium according to step g). In a preferred embodiment the base is selected from basic salts, preferably magnesium oxide.

The extraction of reaction side products according to step f) and the final adjustment of pH according to step g) can be carried out at a temperature of 55°C to 30 °C.

In general, the method for obtaining an alkaline hydro binding compatibilizer agent (HBCA) for polymers according to the present invention may comprise the following steps. A PVA aqueous dispersion is added to a reactor equipped with an agitator, a temperature gauge, a pressure gauge, an electrical resistance steam coil to heat the mixture, an external jacket with air to cool the mixture and a reflux condenser. An aqueous solution of colloid is added to the reactor and the mixture is agitated in a minimum of rate of, for example, 100 rpm. The reactor is heated by electrical resistance or steam coil. A base can be added continuously to the reactor for a period of, for example, 60 minutes with a mass flow rate of for example 0.31 Kg/min; the pH value may be checked and if necessary adjusted to required pH. Because of the high reactivity of the additives and to prevent "spot reactions" all reactive additives may be dissolved in deionized water to create a better distribution and avoid intense "spot reactions". The reaction mixture is heated up due to the addition of a base solution and due to the exothermic heat resulting in this process. When a required temperature is reached, the external heating is stopped. The reaction mixture temperature reaches a higher temperature because of the exothermic reaction heat. The pressure inside the reactor increases, for example, up to 2.5 Bar. After the complete addition of the base, the reactor temperature reaches a required temperature. The reaction proceeds for a period of, for example 1 h. Afterwards the feeding valve is open and a crosslinking agent dissolved in deionized water is spray dosed over a period of, for example 25 to 35 minutes into the reactor under continuous agitation. After a time period of for example, 15 minutes, an aqueous dispersion of a base is slowly added under continuous agitation to increase the pH. Afterwards the reaction mixture being under pressure is led into a mixer in a throttled state (isenthalpic process) and decompressed to atmospheric pressure. During the decompression, cooling takes place. The reaction between the crosslinking agent and the polymer occurs during the cooling process and the base allows to increase the pH up to a required value. The reaction mixture is continuously cooled down and the cutting knifes (of a plough share mixer) are switched on. The crystallization process of the HBCA starts and is finalized at a predetermined temperature. The cooling and cut process continues up to the entire quantity in the mixer reaches at a lower temperature. Then, the product is centrifuged. As a corrective procedure, in case an acetic acid content is higher than the one established after the chemical reactions, water and/or an alkaline solution can be added to increase the pH and neutralize the acid.

Alternatively, the crosslinker and the alkaline agents are added to the crystallization unit instead of the reactor.

In that case, after the complete addition of the base, the reactor temperature is at, for example, 135 °C. The reaction proceeds for a predetermined time. Afterwards the reaction mixture being under pressure is led into a mixer in a throttled state (isenthalpic process) and decompressed to atmospheric pressure. During the decompression cooling takes place. The feeding valve is opened and a crosslinking agent dissolved in deionized water is spray dosed over a predetermined period of for example, between 2 to 3 minutes into the mixture under slow stirring. The reaction time is instant. The reaction is completed, when the pH value is stable at, for example, pH 6.6 to 7. Alternatively, an aqueous solution of crosslinking agent is spray dosed over a period of several minutes, for example, 1, 2, 3, 4, 5, 6, 7, etc. under stirring to the reaction mixture with a determined temperature. After a reaction time of approximately 2 to 5 minutes the reaction is completed, when the pH value is stable at pH 6.6 to 7. The reaction mixture is cooled down. The pH value is measured, and a quantity of base dissolved in deionized water is added spray dosed until a desired final pH value is reached. Cutting knifes (of a plough share mixer) are switched on after leaving the entire quantity in the mixer.The crystallization process of the HBAC starts and is finalized at a predetermined temperature. Then, the product is centrifuged. As a corrective procedure, in case an acetic acid content is higher than the one established after the chemical reactions, water and/or an alkaline solution can be added to increase the pH and neutralize the acid.

Advantageously, the cross-linking increases the molecular weight of the HBAC, and increases the water holding. The use of a crosslinked polymer also increases the thermal degradation temperature as well as the E-module of the resulting products. Furthermore, the residual still active cross-linking additives, adds further cross-linking ability for polar polymers to the HBAC. (The HBAC in a broader sense acts also as a cross linker between polar and non-polar polymers binding the polymers by its OH groups - poly(vinyl alcohol-co-vinyl acetate))

The method according to the present invention follows the following chemical synthesis scheme:

### Basic principle:

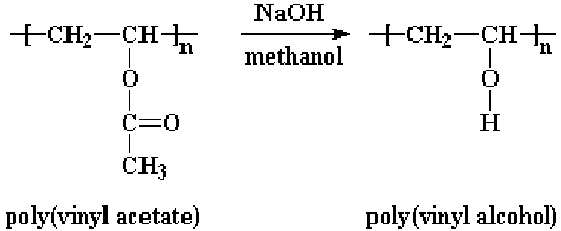

### HBA Principle:

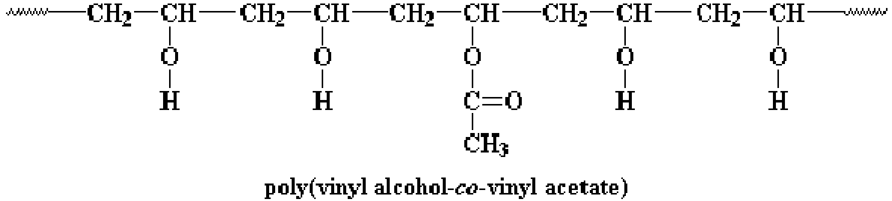

The present invention further comprises an acetic-free alkaline hydro binding compatibilizer agent for polymers (HBCA) consisting of a crosslinked poly(vinyl alcohol) (PVOH)-poly-(vinyl acetate) (PVA) copolymer, wherein PVOH and PVA are distributed statistically in the PVOH-PVA copolymer. As used herein, the term "copolymer" refers to a polymer comprising two or more different monomers. As used herein, the term "statistically distributed" refers to a copolymer wherein the sequence of the monomer residues is randomly.

According to the present invention the PVOH-PVA copolymer corresponds to a high molecular weight polymer with a hydrolysis degree from 10% up to 50%, mostly preferred between 30% to 50%. As used herein, the term "hydrolysis degree" refers to the amount of poly(vinyl) alcohol (PVOH) in the PVOH-poly-(vinyl)acetic acid (PVA) copolymer (n/n).

In addition, the PVOH-PVA copolymer may present a glass transition temperature in the range of 35 to 70 °C, mostly preferred between 40 to 60 °C.

According to the invention, HBCA is a crosslinked PVOH-PVA copolymer, with a residual moisture of 10% to 40% (w/w), preferably 30% by weight. The residual moisture can be determined by thermogravimetric analysis or infrared measurements. Advantageously, water acts as emulsifier and increases the stability of the HBCA in a blend of polymers, preferably at least one polar polymer and at least one non-polar polymer.

According to the invention, HBCA has a vestigial acetic acid content (free acetic acid) content of < 5 ppm in relation to the HBAP (w/w), more preferably < 3 ppm.

The HBCA according to the invention may present an acetic acid content less than 0.01% in relation to the HBCA (w/w), mostly preferred less than 10 ppm in relation to the HBCA (w/w). Advantageously, the HBCA is white (colourless) to off-white and odourless, in particular a smell without any acetic acid smell.

As used herein, the term "hydro binding" refers to the ability to react chemically by the addition of water. Advantageously, the hydro binding results in preserved or increased strength in water.

Advantageously, the HBCA shows a high ability to act as compatibilizer, respectively, polar polymers and/or non-polar polymers. As used herein, the term "polar polymer" refers to polymers with separated electrical charges and thus an electric dipole moment. As used herein, the term "non-polar polymer" refers to a polymer with a symmetric charge distribution and thus without an electric dipole moment

Advantageously, the HBCA comprising a PVOH-PVA copolymer is stable to oils, fats and organic solvents and is partially soluble or insoluble in water.

The HBCA can additionally comprise at least one silicate and/ or graphene in an amount of 0.3 to 2.5% w/w. (preferred 2% w/w) for silicates and 0.10 to 0.30% w/w for graphene types (preferred 0.15 % w/w) related to the mass of the reaction mixture (w/w).

Optionally, the HBCA comprises at least one further component, wherein the further component is selected from silicates, preferably nesosilicates and/or phyllosilicates; polycyclic aromatic hydrocarbons, graphene; and/or polymers, preferably starch.

The HBCA can comprise at least one further component, wherein the further component is at least one phyllosilicate and/or graphene.

The present invention further comprises the use of the hydro binding compatibilizer agent for polymers (HBCA) according to the invention in a blend comprising at least one polymer.

Advantageously, the HBCA influences the oxygen permeability, the nitrogen permeability and/or the water vapor permeability of a polymer blend, preferably reduces the oxygen permeability, the nitrogen permeability and/or the water vapor permeability of a polymer blend.

The oxygen permeability is measured in accordance with ASTM D-3985 at 23°C, 0% relative humidity and 100% oxygen on a film having a thickness of 15 µm to 60 µm. The permeability for water vapor is measured in accordance with ASTM F-1249 at 38°C and 100% relative humidity on a film having a thickness of 15 µm to 60 µm.

Another object of the invention is the use of the HBCA or a HBCA produced in a process according to the invention, as binding compatibilizer agent for at least one polar polymer and at least one non-polar polymer.

As used herein, the term "binding compatibilizer agent" refers to a substance which increases the stability and/or morphology of an immiscible or hardly miscible blend of polymers by creating interactions between the two previously immiscible polymers. As used herein, the term "immiscible or hardly miscible blend" refers to a blend of polymers, which forms more than one phase. As used herein, the term "phase" refers to a region of space, throughout which all physical properties of a material are essentially uniform, e. g. density, index of refraction.

Advantageously, the HBCA increases the compatibility and miscibility of the at least one polar and the at least one non-polar polymer, preferably reduces the surface activity of the at least one polar polymer and at least one non-polar polymer and/or increases the adhesion of the at least one polar polymer and at least one non-polar polymer. Further advantageously, the HBCA cross-links the at least one polar and the at least one non-polar polymer. Thus, the mechanical properties of the blend of the at least one polar and the at least one non-polar polymer are improved and/or properties are achieved that are not attainable in the single polymers.

The polar polymer can be selected from carbohydrates, polyamide (PA), polycarbonate (PC), polyesters, polyethers, polyvinyl alcohol (PVOH), ethylene vinyl alcohol (EVOH).

The at least one polar polymer can be selected from starch, of all kinds, preferably native, thermoplastic or chemically modified starch. Expediently, the at least one polar polymer can also be flour and/or another substance comprising starch. As used herein, the term "thermoplastic starch" refers to a completely de-structured form of starch comprising at least one plasticizer.

The starch used according to the present invention can be selected from pea, barley, cassava, corn, dioscorea, ginger, maize, potato, rice, sorghum, soy bean, sweet potato, tapioca, turmeric and/or wheat starch.

The chemically modified starch can be selected from oxidized starch, etherified starch, preferably starch that is substituted with ethyl and/or propyl groups; esterified starch, preferably starch that is substituted with acyl, propanoyl and/or butanoyl groups; or a combination of chemical modifications, e.g. etherified and esterified starch.

The non-polar polymer according to the present invention can be selected from polyolefins, preferably polypropylene (PP), polyethylene (PE) and/or PBAT or polystyrene (PS), poly[styrene-b-(methylene-co-butylene)-b-styrene] triblock copolymers (SEBS), poly(methyl methacrylate) (PMMA) or acrylonitrile butadiene styrene (ABS), polytetrafluoroethylene (PTFE) or biodegradable polyesters such as polybutylene adipate terephthalate (PBAT), poly (butylene succinate-co-terephhtalate) (PBST), polybutylene succinate (PBS), polyhydroxyalkanoate (PHA), polyhydroxybutyrate (PHB), polycaprolactone (PCL), polylactic acid (PLA) and/or mixtures thereof.

The at least one polymer can be selected from polybutylene adipate terephthalate (PBAT), poly (butylene succinate-co-terephhtalate) (PBST), polybutylene succinate (PBS), polyhydroxyalkanoate (PHA), polyhydroxybutyrate (PHB), polycaprolactone (PCL), polylactic acid (PLA), especially preferred from PBAT.

The HBCA or a HBCA produced in a process according to the invention, is used in polymer blends comprising starch, at least one polyester and/or at least one polyolefin, especially preferred 10% to 70% (m/m) starch, 5% to 40% (m/m) of the HBCA, 5% to 70% (m/m) of the at least one polyester and 5% to 70% (m/m) of the at least one polyolefin.

### EXAMPLES

### Example 1 Production of the alkaline hydro binding compatibilizer agent (HBCA) for polymers

96 Kg of a PVA aqueous dispersion (55 % (w/w)) is added to a reactor equipped with an agitator, a temperature gauge, a pressure gauge, an electrical resistance steam coil to heat the mixture, an external jacket with air to cool the mixture and a reflux condenser. 1,6 Kg of an aqueous solution of sodium bissulfite (35 % (w/w) is added to the reactor and the mixture is agitated in a minimum of rate of 100 rpm. The reactor is heated by electrical resistance or steam coil. At 80 to 82°C, 19.62 kg of sodium hydroxide solution (50 % w/w) is added continuously to the reactor for 60 minutes with a mass flow rate of 0.31 Kg/min; the pH value is checked and if necessary adjusted to pH 7.5 to 8.2. Because of the high reactivity of the additives and to prevent "spot reactions" all reactive additives may be dissolved in deionized water to create a better distribution and avoid intense "spot reactions". The reaction mixture is heated up due to the addition of NaOH solution and due to the exothermic heat resulting in this process. When a temperature of approximately 135°C is reached, the external heating is stopped. The reaction mixture temperature reaches 132°C to 145°C because of the exothermic reaction heat. The pressure inside the reactor increases up to 2.5 Bar. After the complete addition of NaOH, the reactor temperature is at 135 °C. The reaction proceeds for 1 h. Afterwards the feeding valve is open and 100 g sodium tetraborate decahydrate dissolved in 2,5L of deionized water is spray dosed over a period between 25 to 35 minutes into the reactor under continuous agitation. After 15 minutes, 260 mL of an aqueous dispersion of 150g MgO is slowly added under continuous agitation. Afterwards the reaction mixture being under pressure is led into a mixer in a throttled state (isenthalpic process) and decompressed to atmospheric pressure. During the decompression, cooling takes place to 100°C - 90°C. The reaction between sodium tetraborate decahydrate and the polymer occurs during the cooling process and the MgO allows to increase the pH up to a value between pH 7.4 and pH 8.4. The reaction mixture is continuously cooled down to a temperature of approximately 75°C and the cutting knifes (of a plough share mixer) are switched on. At 60°C the crystallization process of the HBCA starts and is finalized at a temperature of 45°C. The cooling and cut process continues up to the entire quantity in the mixer reaches at a temperature between 30°C and 35°C. Then, the product is centrifuged. As a corrective procedure, in case an acetic acid content is higher than the one established after the chemical reactions, water and/or an alkaline solution can be added to increase the pH and neutralize the acid.

### Example 2

In an alternative example, the crosslinker and the alkaline agents and are added to the crystallization unit instead of the reactor.

After the complete addition of NaOH, the reactor temperature is at 135 °C. The reaction proceeds for 1 h. Afterwards the reaction mixture being under pressure is led into a mixer in a throttled state (isenthalpic process) and decompressed to atmospheric pressure. During the decompression cooling takes place to 100°C to 90°C. The feeding valve is opened and 0.002% to 0.005% phosphoric acid dissolved in deionized water is spray dosed over a period between 2 to 3 minutes into the mixture under slow stirring. The reaction time is instant. The reaction is completed, when the pH value is stable at pH 6.6 to 7. Alternatively, 2.5L of an aqueous solution of sodium tetraborate decahydrate (2-4 % w/w) is spray dosed over a period between 2 to 5 minutes under stirring to the reaction mixture with a temperature of 85°C to 75°C. After a reaction time of approximately 2 minutes the reaction is completed, when the pH value is stable at pH 6.6 to 7. The reaction mixture is cooled down to a temperature of approximately 65°C. The pH value is measured, and a quantity of sodium bicarbonate dissolved in deionized water is added spray dosed until a pH value of pH 7.4 to pH 8.4 is reached. Cutting knifes (of a plough share mixer) are switched on after leaving the entire quantity in the mixer at a temperature between 35°C and 45°C. At 60°C the crystallization process of the HBAC starts and is finalized at a temperature of 45°C. (...)

### Example 3

In an alternative example the cross-linking phase comprises the addition of phyllosilicate or graphene.
Same as Example 1 (or Example 2); however, an aqueous dispersion of silicates (or graphene) is added to the reactor (or to the crystallization unit according to example 2) in substitution of (or in combination with) sodium tetraborate decahydrate solution. The reaction proceeds following the extraction of reaction side products and final adjustment of the reaction mixture to a pH of 7.5 to 8.5, according to the procedures described in Example 1(or Example 2)."

### Example 4: Characterization of the HBAP, with a saponification rate of 40%

After the drying process, the HBCA is a white to slightly off-white, odourless powder.

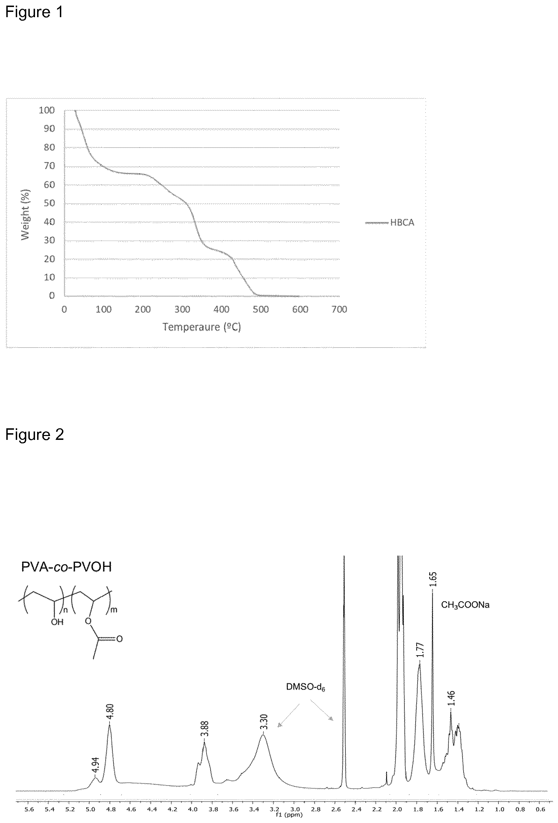

HBAC contains a residual moisture of 30% ± 2 % (determined by thermogravimetric analysis, Figure 1), an acetic acid content of < 0,0003 % (w/w) (≤ 3 ppm) (determined by dynamic head-space GC-MS) and pH value of pH around 8.

HBAC has a glass transition temperature of 45- 46 °C (DSC analysis).

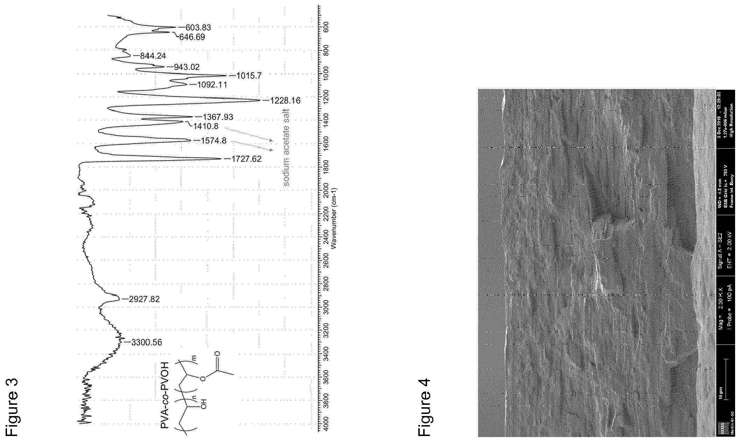

According to the synthesis method, the principal reaction byproduct of the hydrolysis of PVA, acetic acid, is completely neutralized and converted into sodium acetate. Sodium acetate is dissolved in the aqueous phase of the HBCA. The presence of acetic acid is evident in the ¹H NMR spectrum of HBCA at 1.65 ppm as well as in the FTIR analysis with a distinct band at 1574 cm⁻¹ (Figure 2 and 3 respectively).

### Example 5: Method for the use of the HBAP as binding agent

The HBAP produced in a process according to the invention, is used as alkaline hydro binding agent between non-polar polymers, such as PBAT, and a polar polymers, such as natural based polymers like starch. The components are mixed and coextruded to obtain a very uniform and homogeneous polymer blend as shown in Figure 4.

### Cited non-patent literature

Rudin A., Choi P (2013) The Elements of Polymer Science and Engineering. Academic Press, Oxford, 3rd Edition.

## Claims

1. Method for production of an acetic-free alkaline hydro binding compatibilizer agent (HBCA) for polymers, comprising the following steps:
a. Providing a poly(vinyl acetate) (PVA) aqueous dispersion in a reactor;
b. Addition of a protective colloid in liquid to the reactor to form a suspension or solution from the poly(vinyl acetate) (PVA) aqueous dispersion of a);
c. Adjustment of pH value of the suspension or solution to at least pH 7;
d. Hydrolysis of poly(vinyl acetate) (PVA) to obtain a PVA copolymer;
e. Cross-linking of the PVA copolymer from step d) by addition of at least one cross-linker;
f. Extraction of reaction side products;
g. Final adjustment of the reaction mixture to a pH of 7.5 to 8.5.

2. Method according to claim 1 further comprising after step g) a step h) where the acetic-free alkaline hydro binding compatibilizer agent (HBCA) for polymers isphysicallyl blended with organo silicates and/or graphene.

3. Method according to claim 1 or 2, wherein the Mw of PVA is between 200 KDa and 1000 kDa..

4. Method according to any of claims 1 to 3, wherein the dilution of the poly(vinyl acetate) (PVA) aqueous dispersion of a) is above 50% (w/w).

5. Method according to any of claims 1 to 4, wherein the ratio of protective colloid is between 1:10 (w/w).

6. Method according to any of claims 1 to 5, wherein in step c) the pH of the aqueous suspension is adjusted up to 8.5 by the addition of at least one base.

7. Method according to any of claims 1 to 6, wherein a reducing agent is added before step d).

8. Method according to any of claims 1 to 7, wherein in steps c) and d) the base is continuously added to obtain a degree of hydrolysis of 10 - 50%.

9. Method according to any of claims 1 to 8, wherein the step d) is carried out at a temperature of 80 °C to 160 °C.

10. Method according to any of claims 1 to 9, wherein in step e) the PVA copolymer is crosslinked by the addition of at least one crosslinker.

11. Method according to any of claims 1 to 10 wherein in the step e) the crosslinker is added in an amount of 0,002% to 2 % by weight of the weight of PVA.

12. Method according to any of claims 1 to 11, wherein step e) is followed by crystallization.

13. Method according to any of claims 1 to 12, wherein in the step f) the side products in the mixture are extracted by chemical and/or physical methods.

14. An alkaline hydro binding compatibilizer agent (HBCA) for polymers **characterized in that** it comprises:
a poly(vinyl) alcohol (PVOH)-poly-(vinyl acetate) (PVA) copolymer, ,
wherein PVOH and PVA are distributed statistically in the PVOH-PVA copolymer,
wherein the HBCA has an acetic acid content < 5 ppm (w/w), wherein the HBCA has residual moisture of 10% to 40%,
and wherein the HBCA has a pH value of 7.5 to 8.5.

15. Alkaline hydro binding compatibilizer agent (HBCA) for polymers of claim 15, wherein the acetic acid content is < 3 ppm (w/w)

16. Alkaline hydro binding compatibilizer agent (HBCA) for polymers of any of claims 14 or 15 comprising at least one further component, wherein the further component is selected from at least one silicate, such as, nesosilicate or phyllosilicate; a polycyclic aromatic hydrocarbon such as, graphene; and/or at least one polymer, such as, starch.

17. Use of the alkaline hydro binding compatibilizer agent (HBCA) for polymers of any claims 14 to 16 for promoting interfacial adhesion of polymers in a blend comprising at least one polymer.

18. Use of the alkaline hydro binding compatibilizer agent (HBCA) for polymers according to claim 17 in a blend of polymers comprising at least one polar polymer and at least one non-polar polymer or at least one hydrophilic polymer and at least one hydrophobic polymer.

19. Use of the alkaline hydro binding compatibilizer agent (HBCA) for polymers according to claims 17 or 18, in a polymer blend comprising starch, at least one non-polar polymer and/or at least one polyolefin.

20. Method for the production of a polymer blend comprising at least one polar polymer and at least one non-polar polymer comprising the steps:
a. Providing a composition comprising at least one polar polymer, at least one non-polar polymer and the alkaline hydro binding compatibilizer agent (HBCA) for polymers according to claims 14 to 16,
b. Co-extruding the composition of a) until obtaining the polymer blend.
